# EUROPÄISCHE PATENTSCHRIFT

(11) **EP 1 985 052 B1**
(45) Veröffentlichungstag und Bekanntmachung des Hinweises auf die Patenterteilung: **28.10.2015**
(21) Anmeldenummer: 07712098.8
(22) Anmeldetag: 25.01.2007
(51) Int. Cl.: H04L 1/16

(54) **VERFAHREN ZUR ÜBERTRAGUNG VON DATEN IN PAKETEN IN EINEM FUNK-KOMMUNIKATIONSSYSTEM**
METHOD FOR TRANSMITTING DATA IN PACKETS IN A RADIO COMMUNICATIONS SYSTEM
PROCÉDÉ DE TRANSMISSION DE DONNÉES PAR PAQUETS DANS UN SYSTÈME DE RADIOCOMMUNICATION

(30) Priorität: 13.02.2006 EP 06002846
(43) Veröffentlichungstag der Anmeldung: 29.10.2008
(73) Patentinhaber: Siemens Aktiengesellschaft, 80333 München (DE)
(72) Erfinder: KLEIN, Axel, 81737 München (DE); VIERING, Ingo, 81539 München (DE); KRAUSE, Jörn, Golfe Juan, 06220 (FR); WIMMER, Malgorzata, PL-50-307 Wroclaw (PL)
(74) Vertreter: Maier, Daniel Oliver
(86) Internationale Anmeldenummer: PCT/EP2007/050711
(87) Internationale Veröffentlichungsnummer: WO 2007/093486

(56) Entgegenhaltungen:
- WO-A-2007/023022
- US-A1- 2004 258 096
- US-A1- 2004 264 420
- TAO CHEN ET AL: "CDMA2000 revision D reverse link enhancements" PERSONAL, INDOOR AND MOBILE RADIO COMMUNICATIONS, 2004. PIMRC 2004. 15TH IEEE INTERNATIONAL SYMPOSIUM ON BARCELONA, SPAIN 5-8 SEPT. 2004, PISCATAWAY, NJ, USA,IEEE, Bd. 4, 5. September 2004 (2004-09-05), Seiten 2642-2647, XP010754364 ISBN: 0-7803-8523-3
- EVANGELARAS H ET AL: "Applications of Hadamard Matrices", INTERNET CITATION, 2003, XP002375500, Retrieved from the Internet: URL:http://www.uow.edu.au/ jennie/WEB/03WEB/Evangelaras.pdf [retrieved on 2006-04-03]
- QUALCOMM EUROPE: "Considerations for control signalling support of Real Time Services", 3GPP DRAFT; R1-060173, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Helsinki, Finland; 20060123, 19 January 2006 (2006-01-19), XP050417531, [retrieved on 2006-01-19]

## Beschreibung

Die Erfindung betrifft ein Verfahren sowie Systemkomponenten zur Übertragung von Daten in Paketen in einem Funk-Kommunikationssystem.

Funk-Kommunikationssysteme der so genannten dritten Generation (3G), insbesondere das UMTS (Universal Mobile Telecommunications System), welches im Rahmen der 3GPP (3rd Generation Partnership Project) standardisiert wird, gehen vermehrt in die Richtung paketorientrerter Übertragung von Daten und insbesondere Sprache für eine effizientere Nutzung der beschränkt zur Verfügung stehenden Ressource der Funkfrequenzen.

In diesem Zusammenhang wurden beispielsweise Erweiterungen des UMTS-Standards HSDPA (High Speed Downlink Packet Access) und HSUPA (High Speed Uplink Packet Access) - auch als E-DCH (Enhanced Dedicated Channel) bezeichnet - spezifiziert. Der E-DCH weist dabei eine Mehrzahl von so genannten Steuerkanäle (engl. control channel) auf, wie sie unter anderem in der technischen Spezifikation 3GPP TS 25.309 V6.5.0 "FDD Enhanced Uplink; Overall description; Stage 2 (Release 6)", näher beschrieben werden. Beispielsweise weist der E-DCH den so genannten E-HICH-Kanal auf, welcher in Abwärtsrichtung (engl. Downlink, DL) übertragen wird und positive bzw. negative Bestätigungen, so genannten ACK/NACK- (engl. acknowledged/not acknowledged) Signalisierungen für in Aufwärtsrichtung (engl. Uplink, UL) gesendeten Datenpakete enthält. Weiterhin weist der E-DCH den so genannten E-RGCH-Kanal auf, welcher in Abwärtsrichtung relative Bestätigungen bzw. Zeitsteuerungskommandos (engl. scheduling commands) für eine Gruppe von Endgeräten enthält. Diese beiden Steuerkanäle werden nachfolgend näher betrachtet, im Rahmen der Erfindung sind jedoch weitere, dem Fachmann bekannte Kanäle, in denen die Erfindung vorteilhaft einsetzbar ist, mit umfasst.

Sollen die oben genannten Kanäle beispielsweise im Rahmen einer Übertragung von Sprachdaten, beispielsweise in Form eines VoIP-Dienstes (Voice over Internet Protocol), oder auch für andere Paketdatendienste mit vergleichsweise geringer Datenrate eingesetzt werden, so führt dies nach der aktuellen Konfiguration dieser Kanäle nachteilig zu einer deutlichen zusätzlichen Belastung der beschränkten Funkressourcen. Beispielsweise wird derzeit jedem Nutzer des E-DCH eine dedizierte Ressource des E-HICH-Kanals zugewiesen. Diese benutzerspezifische Ressource besteht im Beispiel des E-HICH aus einer Kombination eines Spreizcodes mit Spreizfaktor 128 und einer von 40 möglichen orthogonalen Signaturen. Nach der technischen Spezifikation 3GPP TS 25.211 V6.7.0 "Physical Channels and Mapping of Transport Channels onto Physical Channels (FDD) (Release 6)" kann dadurch an bis zu 40 Nutzer gleichzeitig jeweils ein Informationsbit übertragen und den jeweiligen Empfängern eindeutig zugeordnet werden. Im Falle des E-HICH werden auf diese Weise mit jedem Bit für einen bestimmten Nutzer des E-DCH die oben genannten Zustände ACK/NACK signalisiert.

Das gleiche Verfahren und die gleichen Ressourcen werden auch für den oben erwähnten E-RGCH verwendet, wobei in diesem Fall nicht zwingend jedem Nutzer auch ein E-RGCH zugewiesen wird bzw. einer jeweiligen Gruppe von Nutzern ein gemeinsamer E-RGCH zugewiesen wird, d.h. die Nutzer dieser Gruppe folgen den gleichen relativen Bestätigungskommandos. Für den Fall jedoch, dass jedem Nutzer sowohl ein E-HICH als auch ein E-RGCH zugewiesen wird, bedeutet dies eine weitere Einschränkung der je physikalischen Kanal bzw. Spreizcode adressierbaren Nutzer, d.h. für je 20 Nutzer ist ein physikalischer Kanal vorzusehen.

Für oben genannte Dienste wie VoIP oder eine niederratige Paketdatenübertragung an eine große Anzahl von Nutzern würde dies jedoch bedeuten, dass für beispielsweise 100 Nutzer fünf Spreizcodes allein für die Übertragung von Signalisierungsbestätigungen zugewiesen werden müssen, welches eine deutliche Beschränkung der Übertragungskapazität für die Nutzdatenübertragung in Abwärtsrichtung zur Folge hat.

Das Dokument US 2004/0264420 offenbart ein Verfahren und System zu Absendung von ACK/NACK Bestätigungen in einem CDMA-Mobilnetz.

Aufgabe der Erfindung ist es, ein Verfahren sowie Systemkomponenten eines Funk-Kommunikationssystem anzugeben, welche eine effizientere Nutzung der beschränkt zur Verfügung stehenden Funkressourcen ermöglichen. Diese Aufgabe wird durch die Merkmale der unabhängigen Patentansprüche gelöst. Vorteilhafte Weiterbildungen der Erfindung sind abhängigen Patentansprüchen entnehmbar.

Die Erfindung betrifft ein Verfahren, eine Basisstation und ein Kommunikationssystem nach den Ansprüchen 1, 7 und 9.

Erfindungsgemäß wird ein Verfahren zum Übertragen von Daten in Paketen in einem Funk-Kommunikationssystem vorgeschlagen, bei dem von einer Basisstation des Funk-Kommunikationssystems von zumindest zwei Endgeräten empfangene Datenpakete bestätigt werden, wobei die Bestätigung des Empfangs zeitlich disjunkt unter Verwendung einer gleichen Ressource erfolgt.

Die Erfindung nutzt vorteilhaft die Tatsache, dass beispielsweise Sprachdaten als Ergebnis einer bekannten Sprachkodierung lediglich ca. alle 20ms anfallen, sodass auch eine Übertragung über die Funkschnittstelle theoretisch nur alle 20ms erfolgen muss. Im oben beispielhaft genannten E-DCH weist ein so genanntes Transmission Time Interval (TTI) eine Länge von 2ms auf. VoIP-Pakete mit Sprachdaten, welche jeweils einer Länge von 20ms entsprechen, können in jeweils einem solchen TTI übertragen werden, wenn eine hinreichend komprimierende Sprachkodierung sowie eine Komprimierung von Kopfabschnitten (engl. header) von IP-Paketen erfolgt. Somit werden von einem Nutzer theoretisch nur 1/10 der Funkressource für die Übertragung von VoIP-Daten genutzt, und entsprechend werden theoretisch auch nur 1/10 der benutzerspezifisch zugewiesenen Ressource des E-HICH für die Übertragung von Bestätigungen benötigt. Diese Situation ermöglicht die erfindungsgemäße Nutzung der Ressource beispielsweise des E-HICH gemäß einem Zeitmultiplexverfahren durch eine Mehrzahl von Nutzern, und somit vorteilhaft eine effizientere Nutzung der Funkressourcen in Abwärtsrichtung. Hinzu kommt weiterhin, dass Übertragungen in Abwärtsrichtung synchron erfolgen und daher in Ermangelung von Überlagerungen von Signalen ein Zeitmultiplexverfahren in optimaler Weise einsetzbar ist. Wiederum theoretisch könnte auf diese Weise bei oben genannten beispielhaften 100 Nutzern eine einzige physikalische Ressource für eine Übertragung von Bestätigungen in Abwärtsrichtung ausreichend sein.

Gemäß einer ersten Weiterbildung der Erfindung ist die Ressource zur Bestätigung als eine Signatur ausgestaltet.

Gemäß einer zweiten Weiterbildung der Erfindung wird als Ressource zur Bestätigung des Empfangs der Datenpakete der zumindest zwei Endgeräte zumindest eine Bitposition oder eine Codesequenz in einem Zeitintervall eines Zeitrahmens verwendet.

Gemäß einer dritten Weiterbildung der Erfindung werden die Datenpakete der zumindest zwei Endgeräte in einer gleichen physikalischen Ressource zeitlich disjunkt oder zeitlich überschneidend übertragen.

Gemäß einer vierten Weiterbildung der Erfindung werden den zumindest zwei Endgeräten zur Übertragung der Datenpakete jeweils zumindest ein Zeitintervall eines Rahmens zugewiesen. Nach einer darauf basierenden Weiterbildung werden die jeweiligen Zeitintervalle für die Übertragung der Datenpakete von einer Funknetzsteuerung und/oder der Basisstation den zumindest zwei Endgeräten derart koordiniert zugewiesen, dass eine zeitlich disjunkte Bestätigung des Empfangs unter Verwendung der gleichen Ressource erfolgen kann. Nach einer weiteren darauf basierenden Weiterbildung werden den zumindest zwei Endgeräten die Zeitintervalle zur Übertragung von Datenpaketen an einer gleichen zeitlichen Position in zumindest zwei aufeinander folgenden Rahmen zugewiesen.

Eine erfindungsgemäße Basisstation eines Funk-Kommunikationssystems weist zumindest eine Sende-/Empfangseinrichtung zum Empfangen von Datenpaketen von zumindest zwei Endgeräten und zum Senden von Bestätigungen des Empfangs, sowie eine Steuereinrichtung zum Steuern eines zeitlich disjunkten Sendens der Bestätigungen in einer gleichen Ressource auf.

Gemäß einer Weiterbildung der erfindungsgemäßen Basisstation ist die Steuereinrichtung ferner ausgestaltet zum Zuweisen von Ressourcen zu den zumindest zwei Endgeräten für die Übertragung von Datenpaketen in Aufwärtsrichtung sowie zum Zuweisen der gleichen Ressource für die Übertragung von Bestätigungen in Abwärtsrichtung zu den zumindest zwei Endgeräten.

In einem erfindungsgemäßen Funk-Kommunikationssystem mit zumindest einer Basisstation, einer Funknetzsteuerung und zwei Endgeräten, weist die Funknetzsteuerung zumindest eine Steuereinrichtung zum Zuweisen von Ressourcen zu den zumindest zwei Endgeräten zur Übertragung von Datenpaketen in Aufwärtsrichtung zu der Basisstation, sowie eine Sende-/Empfangseinrichtung zum Senden der Zuweisung zu den zumindest zwei Endgeräten und/oder der Basisstation auf. Die zumindest zwei Endgeräte weisen jeweils zumindest eine Steuereinrichtung zum Steuern einer Übertragung von Datenpaketen in den zugewiesenen Ressourcen durch eine Sende-/Empfangseinrichtung auf, und die Basisstation weist zumindest eine Sende-/Empfangseinrichtung zum Empfangen von Datenpaketen der zumindest zwei Endgeräte und zum Senden von Bestätigungen des Empfangs, und eine Steuereinrichtung zum Steuern eines zeitlich disjunkten Sendens der Bestätigungen in einer gleichen Ressource auf.

Alle genannten Komponenten eines Funk-Kommunikationssystems können selbstverständlich weitere nicht genannte, dem Fachmann jedoch bekannte Einrichtungen zur Durchführung des erfindungsgemäßen Verfahrens aufweisen.

Die Erfindung wird nachfolgend anhand eines Ausführungsbeispiels näher dargestellt. Dabei zeigen
- FIG 1: ein Blockschaltbild eines Funk-Kommunikationssystems basierend auf dem UMTS-Standard,
- FIG 2: eine beispielhafte Übertragung von Daten durch zwei Endgeräte unter gemeinsamer Nutzung einer Bestätigungssignatur in einem Bestätigungskanal, und
- FIG 3: eine weitere beispielhafte Übertragung von Daten durch zwei Endgeräte unter gemeinsamer Nutzung einer Bestätigungssignatur in einem Bestätigungskanal.

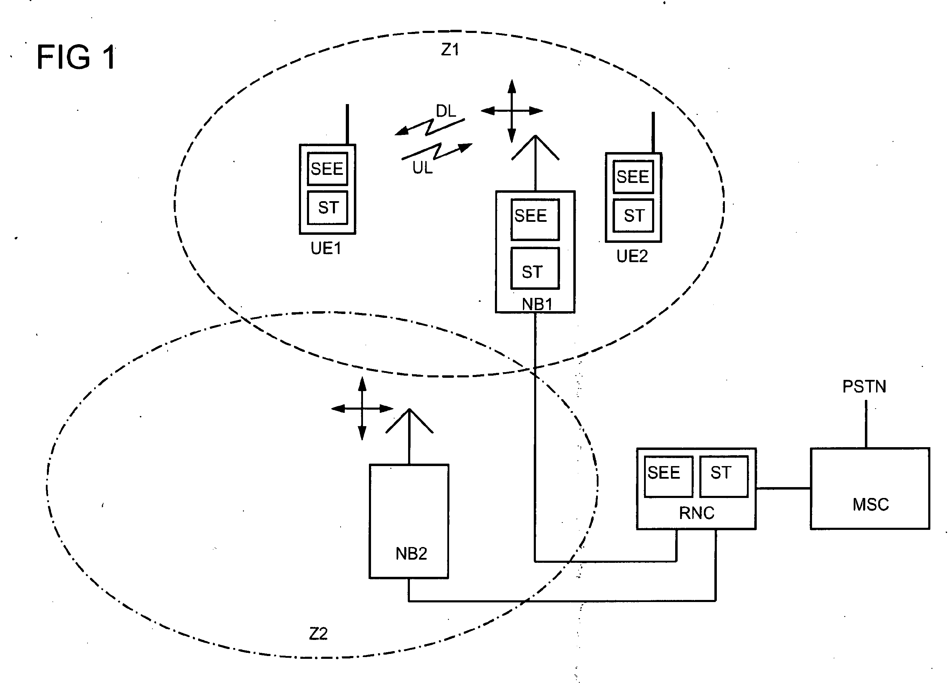

In der FIG 1 ist beispielhaft eine vereinfachte Struktur eines Funk-Kommunikationssystems nach dem bekannten UMTS-Standard dargestellt, wobei eine Realisierung des erfindungsgemäßen Verfahrens in Funk-Kommunikationssystemen nach anderen Standards, beispielsweise der so genannten Evolution des UMTS-Standards (E-UTRA oder LTE (Long Term Evolution)), welcher ebenfalls im Rahmen der 3GPP spezifiziert wird, in gleicher Weise möglich ist.

Die Struktur eines Funk-Kommunikationssystems nach dem UMTS-Standard besteht aus einer oder mehreren Mobilvermittlungsstelle MSC (Mobile Switching Center), welche eine Vermittlung von so genannten leitungsvermittelten Verbindungen (engl. Circuit Switched) sowie eine Verwaltung von verschiedenenen Funktionalitäten des Systems durchführen. Die Mobilvermittlungsstelle MSC übernimmt zudem die Funktion des Übergangs zu dem öffentlichen Telefonnetz PSTN (Public Switched Telephone Network). Neben der Mobilvermittlungsstelle existieren nicht dargestellte so genannte Gateways, SGSN bzw. GGSN, welche einen Übergang in Netzwerke mit paketorientierter Übertragung, beispielsweise dem Internet, ermöglichen.

An die Mobilvermittlungsstelle MSC bzw. Gateways sind eine Vielzahl von Funknetzsteuerungen RNC (Radio Network Controller) angeschlossen, in denen unter anderem physikalische Ressourcen der Funkschnittstelle verwaltet werden. An eine Funknetzsteuerung RNC sind wiederum eine Vielzahl von Basisstationen NB1, NB2 (Node B) angeschlossen, welche unter Nutzung von zugewiesenen physikalischen Ressourcen der Funkschnittstelle Verbindungen zu Endgeräten UE1, UE2 (User Terminal) aufbauen und auslösen können. Jede Basisstation NB1, NB2 versorgt mit den zugeteilten physikalischen Ressourcen jeweils mindestens ein geographisches Gebiet, welches auch als Funkzelle Z1, Z2 bezeichnet wird. Die Übertragung auf der Funkschnittstelle erfolgt sowohl in Aufwärts- UL (Uplink) als auch in Abwärtsrichtung DL (Downlink). Sowohl die Basisstationen NB1, NB2 als auch. Endgeräte UE weisen jeweils Sende/Empfangseinrichtungen SEE für die Signalübertragung auf der Funkschnittstelle auf. Weiterhin weist auch die Funknetzsteuerung eine Sende-/Empfangseinrichtung SEE für einen Austausch von Daten und Signalisierungen mit den Basisstationen sowie der Mobilvermittlungsstelle bzw. Gateways auf. Die Endgeräte UE1, UE2, die Basisstation NB1 sowie die Funknetzsteuerung RNC weisen zudem jeweils eine Steuereinrichtung ST auf, mit der das erfindungsgemäße Verfahren, wie es nachfolgend beschrieben wird, durchgeführt werden kann.

Gemäß der Evolution des UMTS-Standards wird die Komponente der Funknetzsteuerung RNC in der Architektur des Systems nicht mehr existieren. Stattdessen werden die Funktionalitäten der Funknetzsteuerung RNC auf die Basisstation sowie das so genannte Access-Gateway verlagert. Entsprechend können nachfolgende, auf die bekannte UMTS-Systemarchitektur ausgerichtete Ausführungsbeispiele auf die neue Systemarchitektur abgebildet werden.

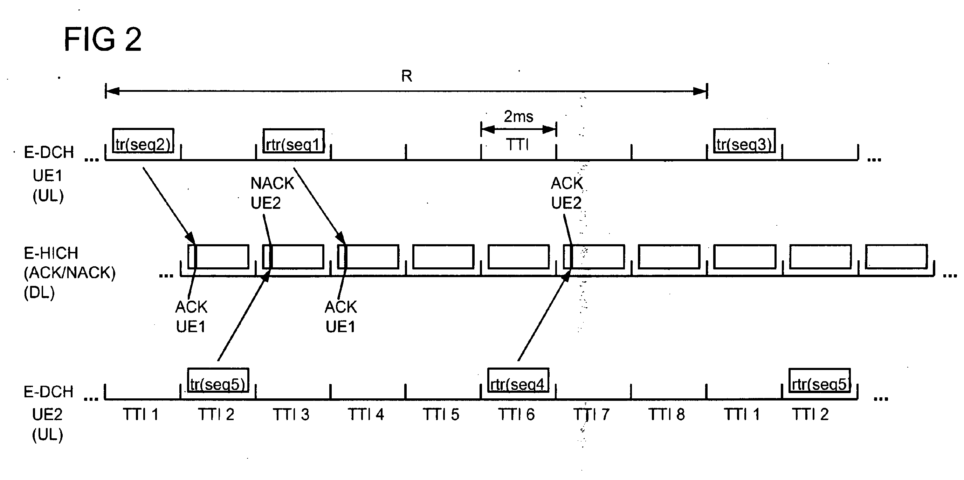

In der FIG 2 ist beispielhaft eine Situation dargestellt, in der zwei Endgeräte UE1, UE2 im Rahmen des E-DCH jeweils Datenpakete, beispielsweise VoIP-Pakete, in einem jeweiligen TTI von 2ms in Aufwärtsrichtung UL zu der Basisstation NB1 senden. Der korrekte bzw. nicht korrekte Empfang der Datenpakete wird von der Basisstation NB1 in dem E-HICH in Abwärtsrichtung DL bestätigt, wobei die Bestätigung mit einem bekannten zeitlichen Versatz von beispielsweise einem, wie beispielhaft dargestellt, oder mehreren, in jedem Fall jedoch einer dem Endgerät bekannten Anzahl TTIs erfolgt. Es sei angenommen, dass je acht TTI einen Rahmen R bilden.

In dem Beispiel sendet das erste Endgerät UE1 in einem ersten TTI 1 des Rahmens R erstmals ein Datenpaket tr(seq2), welches in einer Abfolge von einer Mehrzahl aufeinander folgend übertragener Datenpakete mit der Sequenznummer 2 zur empfangsseitigen Wiederherstellung der ursprünglichen Reihenfolge versehen wird. In einem dritten TTI 3 sendet das erste Endgerät UE1 weiterhin wiederholt ein Datenpaket rtr(seq1), da es nach einer erstmaligen Übertragung des Datenpakets mit der Sequenznummer 1 in dem E-HICH eine negative Bestätigung NACK von der Basisstation NB1 empfangen hat. Empfängt das erste Endgerät UE1 in dem E-HICH in Folge der erstmaligen Übertragung des Datenpakets tr(seq2) eine positive Bestätigung ACK, so sendet es in dem ersten TTI 1 des folgenden Rahmens R ein Datenpaket tr(seq3) mit der entsprechend nachfolgrenden Sequenznummer 3.

Das zweite Endgerät UE2 sendet hingegen in dem zweiten TTI 2 des Rahmens R erstmals ein Datenpaket tr(seq5) sowie in dem sechsten TTI 6 wiederholt ein Datenpaket rtr(seq4). Nach Empfang einer negativen Bestätigung in dem E-HICH bezüglich des Datenpakets tr(seq5) erfolgt eine wiederholte Übertragung des Datenpakets rtr(seq5) in dem zweiten TTI 2 des nachfolgenden Rahmens R.

Für die Übertragung der Bestätigungen ACK/NACK der beiden beispielhaften Endgeräte UE1, UE2 nutzt die Basisstation NB1 eine gleiche Signatur in dem E-HICH-Steuerkanal. Dies wird ermöglicht durch eine disjunkte Nutzung der TTIs eines Rahmens R durch die beiden Endgeräte UE1, UE2. Erfolgt, wie in dem dargestellten Beispiel der FIG 2, eine Bestätigung jeweils um einen TTI versetzt, so weiß das erste Endgerät UE1 nach Übertragung des Datenpakets tr(seq2) in dem ersten TTI 1, dass sich die ihm zugeordnete Signatur in dem zweiten TTI 2 auf diese Übertragung bezieht. Gleiches gilt für alle beschriebenen weiteren Übertragungen durch die Endgeräte UE1, UE2. Da sich alle Übertragungen der Endgeräte UE1, UE2 in Aufwärtsrichtung in einem Rahmen R nicht zeitlich überschneiden, kommt es auch bezüglich des Empfangs von Signaturen in dem E-HICH nicht zu Zweideutigkeiten.

Die Auswahl der TTI eines Rahmens bzw. die Bestimmung der Anzahl TTIs, in denen die Endgeräte UE1, UE2 jeweils in Aufwärtsrichtung Datenpakete übertragen dürfen, erfolgt durch die Funknetzsteuerung RNC. Diese weist jedem Endgerät beispielsweise zwei so genannte HARQ-Prozesse (Hybrid Automatic Repeat Request) für erstmalige und wiederholte Übertragungen von Datenpaketen zu. Diese bekannten HARQ-Prozesse bewirken, dass von der Basisstation NB1 ein mittels einer NACK-Signalisierung negativ bestätigtes Datenpaket von dem betroffenen Endgerät wiederholt übertragen wird, und sowohl das fehlerhaft empfangene erstmalig übertragene Datenpaket als auch das wiederholt übertragene Datenpaket empfangsseitig zur Detektion verwendet wird. Obwohl nach dem derzeitigen Standard einem Endgerät bis zu acht HARQ-Prozesse zugewiesen werden können, wird in der Praxis, insbesondere bei der Übertragung von VoIP-Daten mit dem oben erwähnten Anfall von zu übertragenden Daten in einem vergleichsweise großen zeitlichen Abstand, eine Zuweisung von lediglich zwei HARQ-Prozessen für derartige niederratige Dienste ausreichend sein.

In Erweiterung des dargestellten Beispiels können hierdurch auch mehr als zwei Endgeräte eine gemeinsame Bestätigungsressource nutzen. Bei beispielhaften acht TTIs bzw. HARQ-Prozessen je Rahmen und je zwei zugewiesenen HARQ-Prozessen je Endgerät können bis zu vier Endgeräte eine gemeinsame Bestätigungsressource nutzen, bei je einem zugewiesenen HARQ-Prozess mithin bis zu acht Endgeräte. Seitens der Funknetzsteuerung kann die Zuweisung der TTIs bzw. HARQ-Prozesse zu den Endgeräten dabei beispielsweise berücksichtigen, dass Endgeräten keine benachbarten TTIs und eine gleiche Signatur zugewiesen werden sollten, wenn ihre Übertragungen aufgrund großer Laufzeitunterschiede zu einem überlagerten Empfang von Datenpaketen an der Basisstation führen würden, welches wiederum beispielsweise eine gleichzeitige Übertragung von Bestätigungen zur Folge hätte. Da die Endgeräte in der Regel nicht synchron aussenden, kann der Fall von empfangsseitigen Überlagerungen häufig auftreten, und sollte daher bei der Zuweisung der TTIs bzw. bei der Bildung von Gruppen, die eine gemeinsame Bestätigungsressource bzw. eine gemeinsame Signatur im Zeitmultiplex nutzen, berücksichtigt werden.

Für den Fall, dass die Steuerung von E-DCH-Übertragungen durch die Endgeräte durch die versorgende Basisstation NB1 erfolgt, kann die Basisstation die Anzahl der einem Endgerät zugewiesenen HARQ-Prozesse beispielsweise weiter beschränken und in Kenntnis der zeitlichen Steuerung sowie des zeitlichen Verhältnisses der Endgeräte zueinander somit dafür sorgen, dass keinerlei Überschneidungen bei der Übertragung von Bestätigungen zu mehreren Endgeräten bei Nutzung derselben Signatur auftreten. Diese von der Basisstation durchgeführte zeitliche Steuerung besitzt dabei den Vorteil, dass aufwändige und zeitintensive Signalisierungen zwischen der Basisstation und der Funknetzsteuerung nicht erforderlich sind.

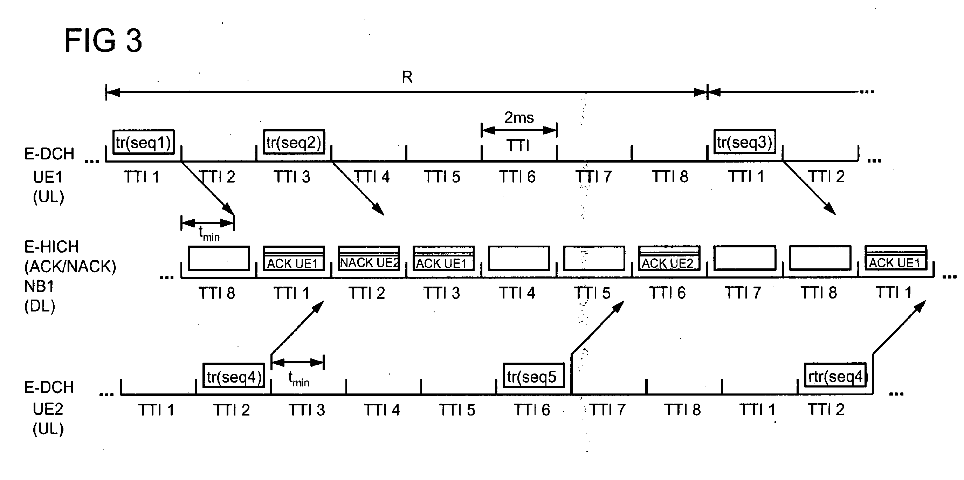

In der FIG 3 ist eine weitere beispielhafte Situation dargestellt, in der zwei Endgeräte UE1, UE2 im Rahmen des E-DCH jeweils Datenpakete, beispielsweise VoIP-Pakete, in einem jeweiligen TTI von 2ms in Aufwärtsrichtung zu der Basisstation NB1 senden. Der korrekte bzw. nicht korrekte Empfang der Datenpakete wird von der Basisstation NB1 wiederum in dem E-HICH bestätigt.

Wiederum sei angenommen, dass je acht TTI einen Rahmen R bilden. Die jeweiligen Rahmen R der Endgeräte UE1, UE2 sowie des E-HICH sind zeitlich gegeneinander verschoben, da die Endgeräte UE1, UE2 nicht miteinander synchronisiert sind und somit ihren jeweiligen Takt zu einem unterschiedlichen Zeitpunkt beginnen. Da die Takte der Endgeräte UE1, UE2 in Aufwärtsrichtung UL gegeneinander verschoben sind, jedoch nur ein gemeinsamer Takt für den bzw. die E-HICH Kanäle in Abwärtsrichtung existiert, ist der Zeitabstand zwischen dem Ende eines von der Basisstation NB1 in einem TTI der Aufwärtsrichtung empfangenen Datenpakets und dem Anfang eines zu sendenden E-HICH-TTI, welcher die korrespondierende Bestätigung übermittelt, nicht für alle Endgeräte gleich sein. Eine Zuordnung zwischen. Aufwärtsrichtungs- und Abwärtsrichtungs-TTIs erfolgt entsprechend derart, dass eine Bestätigung frühestens Δmin nach Ende des empfangenen Aufwärtsrichtungs-TTI gesendet werden kann und im nächstfolgenden Abwärtsrichtungs-TTI erfolgen muss, entsprechend spätestens in einem Abstand Δmin + Länge TTI. Der Mindestabstand Δtmin ergibt sich dabei vorwiegend aus einer Bearbeitungsdauer des empfangenen Datenpakets in der Basisstation und ist auch den Endgeräten UEs bekannt.

Sowohl die Basisstation NB1 als auch die Endgeräte UE1, UE2 nach der FIG 3 sind aufgrund bekannter zeitlicher Beziehungen zwischen den beteiligten Aufwärts- und Abwärtsrichtungskanälen in der Lage, die Zuordnung zwischen Datenpaketen in Aufwärtsrichtung und Bestätigungen in Abwärtsrichtung unabhängig von Signallaufzeiten eindeutig und übereinstimmend zu ermitteln.

In dem Beispiel der FIG 3 sendet das erste Endgerät UE1 in einem ersten TTI 1 erstmals ein Datenpaket tr(seq1), welches in einer Abfolge von einer Mehrzahl aufeinander folgend übertragener Datenpakete mit der Sequenznummer 1 zur empfangsseitigen Wiederherstellung der ursprünglichen Reihenfolge versehen wird. In einem dritten TTI 3 sendet das erste Endgerät UE1 weiterhin erstmals ein Datenpaket tr(seq2) mit der Sequenznummer 2. Empfängt das erste Endgerät UE1 in dem ersten TTI 1 des E-HICH in Folge der erstmaligen Übertragung des Datenpakets tr(seq1) eine positive Bestätigung ACK, so sendet es in dem ersten TTI 1 des folgenden Rahmens R ein Datenpaket tr(seq3) mit der entsprechend nachfolgenden Sequenznummer 3.

Das zweite Endgerät UE2 sendet hingegen in dem zweiten TTI 2 erstmals ein Datenpaket tr(seq4) sowie in dem sechsten TTI 6 ein Datenpaket tr(seq5) in Aufwärtsrichtung UL zu der Basisstation NB1. Nach Empfang einer negativen Bestätigung in dem zweiten TTI 2 des E-HICH bezüglich des Datenpakets tr(seq4) erfolgt eine wiederholte Übertragung des Datenpakets rtr(seq5) in dem zweiten TTI2 des nachfolgenden Rahmens R.

Für die Übertragung der Bestätigungen ACK/NACK der beiden beispielhaft genannten Endgeräte UE1, UE2 nutzt die Basisstation NB1 den gleichen E-HICH-Steuerkanal, d.h. eine gleiche Signatur und gleichen Spreizcode. Dies wird ermöglicht durch eine zeitlich disjunkte Nutzung der E-HICH-TTIs eines Rahmens R für in Abwärtsrichtung DL zu übertragende Bestätigungen ACK/NACK. Erfolgen, wie in dem dargestellten Beispiel der FIG 3, die jeweiligen Datenpaketübertragungen der beiden Endgeräte UE1 und UE2 in unterschiedlichen TTIs eines Rahmens R, so gilt dies auch für die zugehörigen Bestätigungen auf dem gemeinsam genutzten E-HICH. Jedes Endgerät erkennt die ihm zugeordneten Bestätigungen eindeutig auf Grund der ihm bekannten zeitlichen Beziehung zu den von ihm gesendeten Datenpaketen.

Die für den E-HICH und den einleitend erwähnten E-RGCH verwendeten Signaturen ermöglichen, eine größere Anzahl von Teilnehmern bzw. Endgeräten auf einem gemeinsamen Spreizcode (mit beispielsweise einem Spreizfaktor SF = 128) individuell mit einem Informationsbit bedienen zu können. Ein physikalischer Kanal mit SF = 128 kann in einem so genannten Slot 20 Symbole, bei QPSK-Modulation somit 40 bit übertragen. Dieses Informationsbit wird in den drei Slots eines 2ms langen TTIs dreimal wiederholt. Jedem Endgerät könnte nun eine Bitposition in diesem Slot eindeutig zugewiesen werden (bzw. je eine Bitposition für E-HICH und E-RGCH), wodurch 40 Unterkanäle definiert würden. Dies entspricht einem Zeit-Multiplex innerhalb des TTI, wie es beispielhaft in der FIG 2 dargestellt ist.

Insbesondere in CDMA-basierten Systemen kann die Definition einer festen Bitposition jedoch aufgrund einer möglichen größeren Fehlerwahrscheinlichkeit einzelner Bitpositionen gegebenenfalls nachteilig sein. Alternativ kann daher auch ein Code-Multiplex eingesetzt werden, bei dem jeder Unterkanal durch eine 40-stellige Binär-Signatur (einen so genannten Hadamard-Code) charakterisiert wird, welche in ähnlicher Weise wie die Spreizcodes selbst orthogonal sind. Dies führt dazu, dass sich der Spreizfaktor 128 für jedes Bit um einen weiteren Faktor 40 erhöht und die Information jedes Endgerätes über die gesamte TTI-Dauer verteilt wird, wie es in der FIG 3 durch die wagerechten Linien beispielhaft dargestellt ist. Die alternative Ausführungsform des Code-Multiplex ist in der einleitend zitierten technischen Spezifikation 3GPP TS 25.211 beschrieben.

Da die Verarbeitung von Signaturen auf der physikalischen Schicht (Schicht 1 nach dem ISO/OSI-Modell) erfolgt, können auch diese Unterkanäle als physikalische Kanäle bezeichnet werden. Dies bedeutet, dass jedem Endgerät durch die Kombination von Spreizcode und Signatur ein physikalischer E-HICH zugeordnet wird, im Unterschied zu einem bekannten gemeinsam genutzten Kanal (engl. Shared Channel), dessen Zuweisung in der Regel mittels des so genannten MAC-Layers erfolgt.

Die Auswahl der TTI eines Rahmens bzw. die Bestimmung der Anzahl TTIs, in denen die Endgeräte UE1, UE2 jeweils in Aufwärtsrichtung UL Datenpakete übertragen dürfen, erfolgt durch die Funknetzsteuerung RNC bzw. die Basisstation NB1. Erfindungsgemäß weist diese den Endgeräten UE1 und UE2, denen ein gemeinsamer E-HICH für Bestätigungen zugeordnet ist, disjunkte Teilmengen der TTIs eines Rahmens R zu. Im Beispiel des E-DCH erfolgt dies durch Deaktivierung eines oder mehrerer von insgesamt acht so genannter HARQ-Prozesse (Hybrid Automatic Repeat Request).

Obwohl nach dem derzeitigen Standard einem Endgerät bis zu acht HARQ-Prozesse zugewiesen werden können, wird in der Praxis, insbesondere bei der Übertragung von VoIP-Daten mit dem oben erwähnten Anfall von zu übertragenden Daten in einem vergleichsweise großen zeitlichen Abstand, eine Zuweisung von lediglich zwei HARQ-Prozessen für derartige niederratige Dienste ausreichend sein.

In Erweiterung des dargestellten Beispiels können hierdurch auch mehr als zwei Endgeräte eine gemeinsame Bestätigungsressource nutzen. Bei beispielhaften acht TTIs bzw. HARQ-Prozessen je Rahmen und je zwei zugewiesenen HARQ-Prozessen je Endgerät können bis zu vier Endgeräte eine gemeinsame Bestätigungsressource nutzen, bei je einem zugewiesenen HARQ-Prozess sogar bis zu acht Endgeräte.

HARQ-Prozesse dienen neben einer Bildung einer organisatorische Struktur für wiederholte Übertragungen von Datenpaketen (engl. Retransmissions), also die Verarbeitung der Bestätigungen und die daraus folgenden Schritte wie Anstoßen einer wiederholten Übertragung, Prüfen, ob eine Maximalgrenze erreicht ist, Verwalten der Sendepuffer etc., insbesondere bei dem synchronen HARQ-Protokoll des E-DCH aber auch als Scheduling-Einheit. Dies bedeutet, dass so genannte Sendeberechtigungen (engl. Grants) für einzelne HARQ-Prozesse vergeben bzw. für einzelne HARQ-Prozesse ausgeschlossen (deaktiviert) werden können. Die HARQ-Prozesse bilden somit verschachtelte Teilmengen möglicher Sendezeitpunkte (TTIs) derart, dass ein HARQ-Prozess i jeweils den i-ten TTI jedes Rahmens umfasst.

Sendeberechtigungen beim E-DCH können sich dabei auf alle HARQ-Prozesse beziehen, jedoch auch auf bestimmte HARQ-Prozesse beschränken. Letzteres wird bei dem erfindungsgemäßen Multiplexen vorteilhaft ausgenutzt. Endgeräte, deren Sendeberechtigungen auf disjunkte Teilmengen von HARQ-Prozessen beschränkt werden, können bei den Bestätigungen nicht kollidieren. Dabei ist zu beachten, dass Bestätigungen (die in einem gemeinsamen Takt für alle Endgeräte erfolgen) tatsächlich zeitlich disjunkt von der Basisstation in Abwärtsrichtung übertragen werden, während diese Bedingung für die entsprechenden Übertragungen in Aufwärtsrichtung wegen der in der Regel zeitversetzten TTI-Takte nicht gilt. Zeitliche Überschneidungen der Übertragungen in Aufwärtsrichtung führen dabei nicht zu Störungen, solange sie durch entsprechend unterschiedliche zeitliche Offsets zum Takt der Übertragungen in Abwärtsrichtung wieder ausgeglichen werden können.

Obwohl vorstehend ausschließlich der E-HICH-Kanal betrachtet wurde, sind sämtliche Beschreibungen in gleicher Weise für den E-RGCH-Kanal sowie weitere dem Fachmann bekannte Kanäle gültig.

## Patentansprüche

1. Verfahren zum Übertragen von Daten in Paketen in einem Funk-Kommunikationssystem, bei dem
zumindest zwei Endgeräte (UE1, UE2) in disjunkten Zeitintervallen (TTI) eines in eine Mehrzahl von Zeitintervallen (TTI) aufgeteilten Übertragungsrahmens (R) eines Datenkanals in Aufwärtsrichtung (E-DCH) jeweils Datenpakete zu einer Basisstation (NB1) übertragen, **dadurch gekennzeichnet, dass** von der Basisstation (NB1) in einem in eine gleiche Mehrzahl von Zeitintervallen (TTI) aufgeteilten Übertragungsrahmen eines Steuerkanals (E-HICH) Bestätigungen (ACK, NACK) des Empfangs der übertragenen Datenpakete zu den zumindest zwei Endgeräten (UE1, UE2) übertragen werden, wobei die Bestätigungen (ACK, NACK) jeweils in einem durch eine jeweilige Signatur charakterisierten Unterkanal übertragen werden, und wobei für die Bestätigungen (ACK, NACK) zu den zumindest zwei Endgeräten (UE1, UE2) eine identische Signatur in disjunkten Zeitintervallen (TTI) des Übertragungsrahmens des Steuerkanals (E-HICH) verwendet wird.

2. Verfahren nach Anspruch 1, wobei
die Signaturen orthogonale Binär-Signaturen, insbesondere Hadamard-Codes, sind.

3. Verfahren nach Anspruch 1 oder 2, wobei
die Signaturen eine Spreizung der Bestätigung (ACK, NACK) über die Länge eines Transmission Time Intervalls (TTI) bewirken.

4. Verfahren nach einem vorstehenden Anspruch, wobei die Datenpakete der zumindest zwei Endgeräte (UE1, UE2) in einer gleichen physikalischen Ressource zeitlich disjunkt oder zeitlich überschneidend übertragen werden.

5. Verfahren nach Anspruch 1, bei dem
die jeweiligen Zeitintervalle (TTI) für die Übertragung der Datenpakete von einer Funknetzsteuerung (RNC) und/oder der Basisstation (NB1) den zumindest zwei Endgeräten (UE1, UE2) derart koordiniert zugewiesen werden, dass die Bestätigungen (ACK, NACK) des Empfangs unter Verwendung der identischen Signatur in disjunkten Zeitintervallen (TTI) des Übertragungsrahmens des Steuerkanals (E-HICH) erfolgen kann.

6. Verfahren nach Anspruch 5, bei dem
den zumindest zwei Endgeräten (UE1, UE2) die Zeitintervalle (TTI) zur Übertragung von Datenpaketen an einer gleichen zeitlichen Position in zumindest zwei aufeinander folgenden Rahmen (R) zugewiesen werden.

7. Basisstation (NB1) eines Funk-Kommunikationssystems, aufweisend zumindest eine Sende-/Empfangseinrichtung (SEE) zum Empfangen von in disjunkten Zeitintervallen (TTI) eines in eine Mehrzahl von Zeitintervallen (TTI) aufgeteilten Übertragungsrahmens (R) eines Datenkanals in Aufwärtsrichtung (E-DCH) übertragenen Datenpaketen von zumindest zwei Endgeräten (UE1, UE2), und zum Übertragen von Betätigungen (ACK, NACK) des Empfangs der übertragenen Datenpakete **dadurch gekennzeichnet, dass** die Bestätigungen in einem in eine gleiche Mehrzahl von Zeitintervallen (TTI) aufgeteilten Übertragungsrahmen eines Steuerkanals (E-HICH) zu den zumindest zwei Endgeräten (UE1, UE2) übertragen werden, wobei die Bestätigungen (ACK, NACK) jeweils in einem durch eine jeweilige Signatur charakterisierten Unterkanal übertragen werden, und wobei für die Bestätigungen (ACK, NACK) zu den zumindest zwei Endgeräten (UE1, UE2) eine identische Signatur in disjunkten Zeitintervallen (TTI) des Übertragungsrahmens des Steuerkanals (E-HICH) verwendet wird.

8. Basisstation (NB1) nach Anspruch 7, wobei
die Steuereinrichtung (ST) ferner ausgestaltet ist zum Zuweisen von Ressourcen zu den zumindest zwei Endgeräten (UE1, UE2) für die Übertragung von Datenpaketen in Aufwärtsrichtung (UL) und zum Zuweisen der gleichen Ressource für die Übertragung von Bestätigungen in Abwärtsrichtung (DL) zu den zumindest zwei Endgeräten (UE1, UE2).

9. Funk-Kommunikationssystem mit zumindest einer Basisstation (NB1), einer Funknetzsteuerung (RNC) und zwei Endgeräten (UE1, UE2), wobei
die Funknetzsteuerung (RNC) zumindest eine Steuereinrichtung (ST) zum Zuweisen von Ressourcen zu den zumindest zwei Endgeräten (UE1, UE2) zur Übertragung von Datenpaketen in Aufwärtsrichtung (UL) zu der Basisstation (NB1) in disjunkten Zeitintervallen (TTI) eines in eine Mehrzahl von Zeitintervallen (TTI) aufgeteilten Übertragungsrahmens (R) eines Datenkanals in Aufwärtsrichtung (E-DCH), sowie eine Sende-/Empfangseinrichtung (SEE) zum Senden der Zuweisung zu den zumindest zwei Endgeräten (UE1, UE2) und/oder der Basisstation (NB1) aufweist,
die zumindest zwei Endgeräte (UE1, UE2) jeweils zumindest eine Steuereinrichtung (ST) zum Steuern einer Übertragung von Datenpaketen in den zugewiesenen Ressourcen durch eine Sende-/Empfangseinrichtung (SEE) aufweisen, und
die Basisstation (NB1) zumindest eine Sende-/Empfangseinrichtung (SEE) aufweist zum Empfangen von Datenpaketen der zumindest zwei Endgeräte (UE1, UE2) und zum Senden von Bestätigungen des Empfangs zu den zumindest zwei Endgeräten (UE1, UE2) **dadurch gekennzeichnet, dass** die Bestätigungen in einem in eine gleiche Mehrzahl von Zeitintervallen (TTI) aufgeteilten Übertragungsrahmen eines Steuerkanals (E-HICH) übertragen werden, und eine Steuereinrichtung (ST) aufweist zum Steuern des Sendens der Bestätigungen (ACK, NACK) jeweils in einem durch eine jeweilige Signatur charakterisierten Unterkanal, wobei für die Bestätigungen (ACK, NACK) zu den zumindest zwei Endgeräten (UE1, UE2) eine identische Signatur in disjunkten Zeitintervallen (TTI) des Übertragungsrahmens des Steuerkanals (E-HICH) verwendet wird.

## Claims

1. Method for transmitting data in packets in a radio communications system, in which
at least two terminals (UE1, UE2) in delayed time intervals (TTI) of a transmission frame (R), subdivided into a plurality of time intervals (TTI), of a data channel each transmit data packets to a base station (NB1) in an uplink direction (E-DCH), **characterised in that**
confirmations (ACK, NACK) of the receipt of the transmitted data packets are transmitted to the at least two terminals (UE1, UE2) from the base station (NB1) in a transmission frame, subdivided into an identical plurality of time intervals (TTI), of a control channel (E-HICH), with the confirmations (ACK, NACK) being transmitted in a sub-channel **characterised by** a respective signature in each case, and wherein for the confirmations (ACK, NACK) an identical signature to the at least two terminals (UE1, UE2) is used in delayed time intervals (TTI) of the transmission frame of the control channel (E-HICH).

2. Method according to claim 1, with the signatures being orthogonal binary signatures, in particular Hadamard codes.

3. Method according to claim 1 or 2, with the signatures initiating a spreading of the confirmation (ACK, NACK) over the length of a transmission time interval (TTI).

4. Method according to a preceding claim, with the data packets of the at least two terminals (UE1, UE2) being transmitted in an identical physical resource with a time interval or in a temporally overlaying fashion.

5. Method according to claim 1, in which the respective time intervals (TTI) for the transmission of data packets by a radio network controller (RNC) and/or the base station (NB1) are assigned to the at least two terminals (UE1, UE2) in a coordinated fashion such that the confirmations (ACK, NACK) of the receipt can take place in delayed time intervals (TTI) of the transmission frame of the control channel (E-HICH), using the identical signature.

6. Method according to claim 5, in which the time intervals (TTI) for transmitting data packets to an identical position in at least two consecutive frames (R) are assigned to at least two terminals (UE1, UE2).

7. Base station (NB1) of a radio communications system, comprising at least one transmitting/receiving facility (SEE) for receiving data packets transmitted in delayed time intervals (TTI) of a transmission frame (R), subdivided into a plurality of time intervals (TTI), of a data channel in the uplink direction (E-DCH) from at least two terminals (UE1, UE2) and for transmitting confirmations (ACK, NACK) of the receipt of the transmitted data packets, **characterised in that** the confirmations are transmitted in a transmission frame, subdivided into an identical plurality of time intervals (TTI), of a control channel (E-HICH) to the at least two terminals (UE1, UE2), with the confirmations (ACK, NACK) being transmitted in a sub-channel **characterised by** a respective signature in each case, and wherein for the confirmations (ACK, NACK) an identical signature to the at least two terminals (UE1, UE2) is used in delayed time intervals (TTI) of the transmission frame of the control channel (E-HICH).

8. Base station (NB1) according to claim 7, with the control facility (ST) also being configured so as to assign resources to the at least two terminals (UE1, UE2) for the transmission of data packets in the uplink direction (UL) and to assign the same resource for the transmission of confirmations in the downlink direction (DL) to the at least two terminals (UE1, UE2).

9. Radio communications system having at least one base station (NB1), a radio network controller (RNC) and two terminals (UE1, UE2), with
the radio network controller (RNC) having at least one control facility (ST) for assigning resources to the at least two terminals (UE1, UE2) for transmitting data packets in the uplink direction (UL) to the base station (NB1) in delayed time intervals (TTI) of a transmission frame (R), subdivided into a plurality of time intervals (TTI), of a data channel in the uplink direction (E-DCH), as well as a transmitting/receiving facility (SEE) for transmitting the assignment to the at least two terminals (UE1, UE2) and/or the base station (NB1),
the at least two terminals (UE1, UE2) each having at least one control facility (ST) for controlling a transmission of data packets in the assigned resources by means of a transmitting/receiving facility (SEE), and
the base station (NB1) having at least one transmitting/receiving facility (SEEE) for receiving data packets of the at least two terminals (UE1, UE2) and for transmitting confirmations of the receipt to the at least two terminals (UE1, UE2), **characterised in that** the confirmations are transmitted in a transmission frame, subdivided into an identical plurality of time intervals (TTI), of a control channel (E-HICH), and having a control facility (ST) for controlling the transmission of the confirmations (ACK, NACK) in a sub-channel **characterised by** a respective signature in each case, wherein for the confirmations (ACK, NACK) an identical signature to the at least two terminals (UE1, UE2) is used in delayed time intervals (TTI) of the transmission frame of the control channel (E-HICH).

## Revendications

1. Procédé de transmission de données par paquets dans un système de radiocommunication, dans lequel
au moins deux terminaux (UE1, UE2) transmettent chacun dans le sens montant (E-DCH) pendant des intervalles de temps (TTI) distincts d'une trame de transmission (R), découpée en une pluralité d'intervalles de temps (TTI), d'une voie de données, des paquets de données à une station de base (NB1),
**caractérisé en ce que** :
la station de base (NB1) transmet aux au moins deux terminaux (UE1, UE2), dans une trame de transmission, découpée en une pluralité identique d'intervalles de temps (TTI), d'une voie de commande (E-HICH), des acquittements (ACK, NACK) de la réception des paquets de données, étant entendu que les acquittements (ACK, NACK) sont chacun transmis dans une sous-voie **caractérisée par** une signature respective et que, pour les acquittements (ACK, NACK) transmis aux au moins deux terminaux (UE1, UE2), on emploie une signature identique pendant des intervalles de temps (TTI) distincts de la trame de transmission de la voie de commande (E-HICH).

2. Procédé selon la revendication 1, dans lequel les signatures sont des signatures binaires orthogonales, notamment des codes de Hadamard.

3. Procédé selon la revendication 1 ou 2, dans lequel les signatures provoquent un étalement de l'acquittement (ACK, NACK) sur la longueur d'un intervalle de temps de transmission (TTI).

4. Procédé selon l'une quelconque des revendications précédentes, dans lequel
les paquets de données des au moins deux terminaux (UE1, UE2) sont transmis dans une même ressource physique à des moments distincts ou à des moments se chevauchant.

5. Procédé selon la revendication 1, dans lequel
les différents intervalles de temps (TTI) servant à la transmission des paquets de données d'une commande de réseau de radiocommunication (RNC) et/ou de la station de base (NB1) sont alloués aux au moins deux terminaux (UE1, UE2) d'une façon coordonnée de telle sorte que les acquittements (ACK, NACK) de la réception peuvent se faire en utilisant la même signature pendant des intervalles de temps (TTI) distincts de la trame de transmission de la voie de commande (E-HICH).

6. Procédé selon la revendication 5, dans lequel
les intervalles de temps (TTI) servant à la transmission de paquets de données sont alloués aux au moins deux terminaux (UE1, UE2) sur une même position temporelle dans au moins deux trames successives (R).

7. Station de base (NB1) d'un système de radiocommunication, comportant au moins un équipement d'émission/réception (SEE) servant à recevoir d'au moins deux terminaux (UE1, UE2) des paquets de données transmis dans le sens montant (E-DCH), pendant des intervalles de temps (TTI) distincts d'une trame de transmission (R), découpée en une pluralité d'intervalles de temps (TTI), d'une voie de données, et à transmettre des acquittements (ACK, NACK) de la réception des paquets de données transmis, **caractérisée en ce que** les acquittements sont transmis aux au moins deux terminaux (UE1, UE2) dans une trame de transmission, découpée en une pluralité identique d'intervalles de temps (TTI), d'une voie de commande (E-HICH), étant entendu que les acquittements (ACK, NACK) sont chacun transmis dans une sous-voie **caractérisée par** une signature respective et que, pour les acquittements (ACK, NACK) envoyés aux au moins deux terminaux (UE1, UE2), on emploie une signature identique pendant des intervalles de temps (TTI) distincts de la trame de transmission de la voie de commande (E-HICH).

8. Station de base (NB1) selon la revendication 7, dans laquelle
l'équipement de commande (ST) est par ailleurs configuré pour allouer des ressources aux au moins deux terminaux (UE1, UE2) en vue de la transmission de paquets de données dans le sens montant (UL) et pour allouer la même ressource en vue de la transmission d'acquittements dans le sens descendant (DL) aux au moins deux terminaux (UE1, UE2).

9. Système de radiocommunication comportant au moins une station de base (NB1), une commande de réseau de radiocommunication (RNC) et deux terminaux (UE1, UE2), dans lequel
la commande de réseau de radiocommunication comprend au moins un équipement de commande (ST) servant à allouer des ressources aux au moins deux terminaux (UE1, UE2) en vue de la transmission de paquets de données dans le sens montant (UL) à la station de base (NB1) pendant des intervalles de temps (TTI) distincts d'une trame de transmission (R), découpée en une pluralité d'intervalles de temps (TTI), d'une voie de données dans le sens montant (E-DCH), ainsi qu'un équipement d'émission/réception (SEE) servant à envoyer l'allocation aux au moins deux terminaux (UE1, UE2) et/ou à la station de base (NB1),
les au moins deux terminaux (UE1, UE2) comprennent chacun au moins un équipement de commande (ST) servant à commander une transmission de paquets de données, par un équipement d'émission/réception (SEE), dans les ressources allouées, et la station de base (NB1) comprend au moins un équipement d'émission/réception (SEE) servant à recevoir des paquets de données des au moins deux terminaux (UE1, UE2) et à envoyer des acquittements de la réception aux au moins deux terminaux (UE1, UE2), **caractérisé en ce que** les acquittements sont transmis dans une trame de transmission, découpée en une pluralité identique d'intervalles de temps (TTI), d'une voie de commande (E-HICH), et un équipement de commande (ST) servant à commander l'envoi des acquittements (ACK, NACK) à chaque fois dans une sous-voie **caractérisée par** une signature respective, étant entendu que pour les acquittements (ACK, NACK) envoyés aux au moins deux terminaux (UE1, UE2), on utilise une signature identique pendant des intervalles de temps (TTI) distincts de la trame de transmission de la voie de commande (E-HICH).
